# EUROPEAN PATENT SPECIFICATION

(11) **EP 3 797 202 B1**
(45) Date of publication and mention of the grant of the patent: **11.10.2023**
(21) Application number: 19807307.4
(22) Date of filing: 21.05.2019
(51) Int. Cl.: E06C 7/18, E06C 5/36, E04G 21/32, E06C 1/12, E06C 7/14, E06C 7/42, E06C 7/44, E04G 5/00

(54) **FALL CONTROL LADDER**
FALLSCHUTZLEITER
ÉCHELLE ANTI-CHUTE

(30) Priority: 22.05.2018 AU 2018901797
(43) Date of publication of application: 31.03.2021
(73) Proprietor: Branach Technology Pty Ltd, Boronia, Victoria 3155 (AU)
(72) Inventor: WALSH, Michael, Heathmont, Victoria 3135 (AU)
(74) Representative: Gulde & Partner
(86) International application number: PCT/AU2019/050491
(87) International publication number: WO 2019/222799

(56) References cited:
- EP-A1- 2 826 947
- WO-A1-03/071083
- WO-A1-2015/042277
- GB-A- 2 502 856
- JP-A- 2011 200 640
- US-A- 4 899 847
- US-B2- 8 348 014
- US-B2- 8 348 014

## Description

### TECHNICAL FIELD

The invention relates to a ladder comprising a fall control system.

### BACKGROUND

All ladders pose a safety risk, in that a user can ascend the ladder and work at elevated work regions. The freedom to ascend and descend the ladder is vital to the operation of the ladder; however, a momentary lapse of concentration can lead to a loss of footing or overbalancing and the user can be separated from the ladder, resulting in harm to the user.

The separation of the user from the ladder can be brought about by user error, or by a lack of stability in the ladder causing an unwanted movement of the ladder footing. While some users elect to engage a tether or safety harness to their surroundings once they are located at the elevated work region to prevent a fall, in the event of the user losing contact with the ladder, the user can become stranded at the elevated work region. This can be very problematic, especially if the user has become incapacitated due to injury or loss of consciousness. To rescue the incapacitated user then requires third-party assistance, whether in the form of emergency services or a work colleague. Frequently, this will expose the third-party rescuer to a similarly elevated, and dangerous location, to retrieve the user and sever any fixed tethers that the user has engaged prior to their accident.

Document US 8348014 B2 discloses a ladder having a fall control system according to the preamble of claim 1.

The present invention was conceived with these shortcomings in mind.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, a limited number of the exemplary methods and materials are described herein.

### SUMMARY OF THE INVENTION

In broad terms, the invention provides a ladder having a fall control system, according to claim 1, comprising: a ladder; a tensioner mounted towards a bottom end of the ladder; a mount mounted towards a top end of the ladder; a cable that extends from the tensioner and over the mount in a looped configuration; and an arrestor movably engaged with the cable for coupling a user to the cable, wherein the tensioner has a locked configuration for holding tension on the cable to support a weight of the user and an open configuration for allowing the cable to pass through the tensioner. The ladder may be an extendable ladder. The cable may have a fixed end secured to the tensioner and a free end that passes through the tensioner to vary the length of cable in the fall control system. The cable may be a rope. The rope may have a termination end configured to be removably coupled with the tensioner.

The mount may comprise a closable opening for receiving and retaining the cable therein. The mount may comprise a cable guide turning the cable through about 180 degrees. This allows the mount to guide the cable as it passes over the mount and to smoothly feed the cable over the mount.

The cable may comprise a position indicator for marking the attachment point for the arrestor. This reduces the risk of a user connecting the arrestor to the wrong portion of the cable. The arrestor may be couplable with a safety harness for securing the user therein.

The ladder may additionally comprise an intermediary mount for guiding the cable along a longitudinal axis of the ladder. The arrestor may comprise a connector for selectively engaging the intermediary mount. This allows the user to support themselves laterally while working on the ladder. This may also allow the user to have two free hands, utilising the intermediary mount as a centre balance.

The arrestor may have an active configuration where the arrestor locks on the cable and thereby holds the user at a fixed point on the cable. The arrestor may have an inactive configuration where the arrestor can slide freely along the cable.

The ladder may further comprise a pair of adjustable legs for varying a width of a base of the ladder. The ladder may further comprise a tether system for tethering the ladder to an anchor point.

The ladder may further comprise a cable store for storing the unused cable. The cable store may be releasably engaged with the ladder.

The tensioner may be configured to engage a centre portion of the cable, the centre potion located between the free ends of the cable.

The tensioner may be configured to thread a mid-section of the cable between an inlet and an outlet thereof. The tensioner is rigidly mounted to the ladder at a height accessible from the ground on which the ladder is supported.

The cable may be confined to a front face of the ladder. The cable may be separable from the ladder for ease of inspection and replacement.

In one aspect, the invention provides a ladder having a tether system for tethering to an anchor, comprising: a ladder; a brake mounted towards an upper end of the ladder; a coupling mounted towards a bottom end of the ladder; and a cord extending from the coupling to the brake via the anchor point, wherein the brake has an operative configuration for holding tension on the cord against the anchor and an inoperative configuration allowing the cord to pass through the brake.

The brake in the operative configuration may tension the cord against the anchor, such that a horizontal force is applied by the cord pulling the ladder toward the anchor and a vertical force is applied pulling the ladder toward the ground on which the ladder is supported.

The coupling may comprise a bracket for securing an end portion of the cord thereto.

The coupling may further comprise a hook for stowing the cord on the ladder, when the tether system is not in use.

The brake may have an inlet for receiving the cord and an outlet by which a free end of the cord exits the brake. A force applied to the free end of the cord may tension the cord against the anchor, and in use, the tension on the cord is maintained by the brake.

The brake may comprise an actuator for selecting the operative configuration and the inoperative configuration of the brake.

The brake may comprise internal projections for gripping the cord.

The brake may comprise a locking member, configured to bias the brake to the operative configuration.

The brake may be rigidly mounted to the ladder.

The cord may be separable from the ladder for ease of inspection and replacement.

In another aspect, not forming part of the claimed subject-matter, a tensioner is provided, for controlling tension on a cable, having a default locked configuration and an open configuration, comprising: a body having an inlet and an outlet interconnected by an internal channel that extends through the body for receiving the cable; the internal channel being defined by a wall and a rotatable locking member, wherein, in use, tension on the cable in a first direction applies a force to the rotatable locking member that urges the locking member into the channel and impedes movement of the cable through the channel thereby placing the tensioner in the default locked configuration, and wherein, in use, tension on the cable in a second, opposing direction applies a force to the rotatable locking member that urges the locking member out of the channel to place the tensioner in the open configuration.

In the open configuration movement of the cord in a second, opposing direction may relieve the force on the locking member clearing the channel and thereby allowing movement of the cable through the channel.

The tensioner provides a locked configuration where the cable cannot move within the channel and an open configuration where the cable can move within the channel.

The locked configuration may allow movement of the cable in the first direction and prohibit movement of the cable in the second direction.

The tensioner may further comprise a release for selectively engaging the open configuration of the tensioner.

The tensioner may further comprise a lock disabling the release.

The tensioner may further comprise a cover having a slot, the cover being rotatably mounted to the body such that the slot can be selectively aligned with each of the inlet and the outlet to insert or removed the cable from the internal channel.

The cover may be coaxially mounted to the body sharing a common central axis of rotation.

The internal channel may receive a mid-portion of the cable with the cover rotatably engaged with the body.

The channel may be ox bow shaped.

The locking member may comprise a pulley or a sheave for guiding the cable thereabout, a protrusion for extending into the channel to engage with the cable and a shoulder for engagement with the release.

The release may be pivotally mounted in a side wall of the body and pivot outwardly for activation.

The release may be biased to maintain the tensioner in the locked configuration.

The release may comprise a protruding lip, that on rotation is brought into engagement with the shoulder of the locking member, rotating the locking member such that the protrusion is drawn out of the channel and out of contact with the cable.

The protrusion may comprise a recess for engaging the cable. The recess may be V-shaped. The recess may be a notch. The recess may have ridges to increase friction when in contact with the cable. The recess may be toothed to grip the cable on contact therewith.

The wall of the channel may be configured to provide a bulge that narrows the channel. The bulge may be located in the channel adjacent the protrusion of the locking member to define a pinch point on the cable.

The wall of the channel may be a side wall of the body. The wall may be a stationary wall.

Various features, aspects, and advantages of the invention will become more apparent from the following description of embodiments of the invention, along with the accompanying drawings in which like numerals represent like components.

### BRIEF DESCRIPTION OF THE DRAWINGS

Embodiments of the invention are illustrated by way of example, and not by way of limitation, with reference to the accompanying drawings, of which:

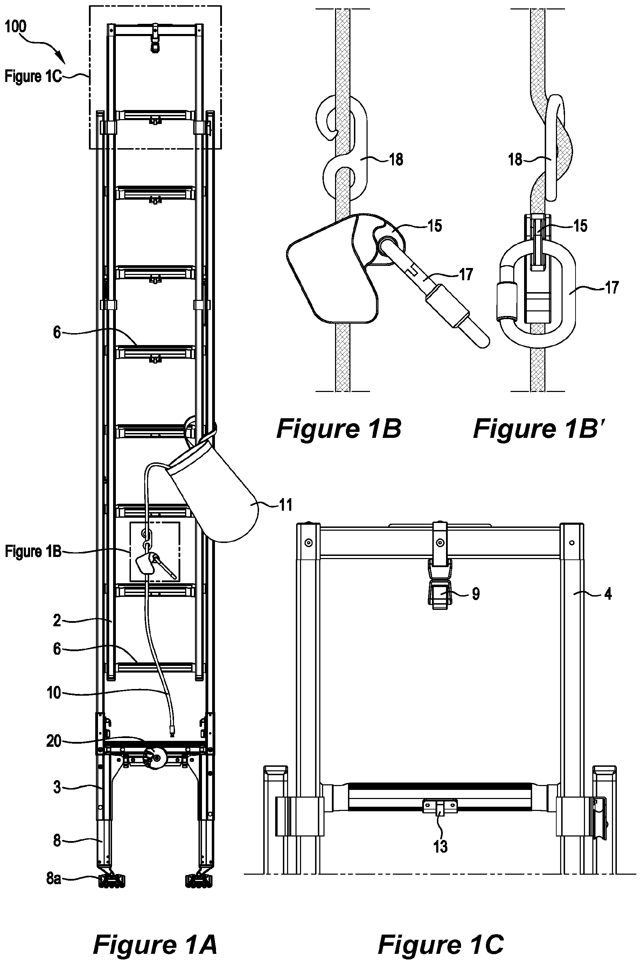

Figure 1A is a perspective view of a fall control ladder according to an embodiment of the invention illustrating a life-line rope partially stored in a rope bag;
Figure 1B is a side view of a fall-arrestor or rope grab for engaging a user's harness with the life-line rope;
Figure 1 B' is a front view of the fall-arrestor of Figure 1B engaging a user's harness with the life-line rope;
Figure 1C is an enlarged perspective view of a turn point or rope guide mounted towards the upper end of the fall control ladder;
Figure 1D is a schematic diagram of the fall control ladder, life-line rope arrangement, and a tether rope;
Figure 2A is a perspective view of a rope brake or descender, rigidly mounted to towards a lower end of the fall control ladder;
Figure 2B is a perspective view of a rope termination being coupled to the descender;
Figure 2C is a perspective view of the engaged rope termination having been twisted into a vertical alignment with the fall control ladder;

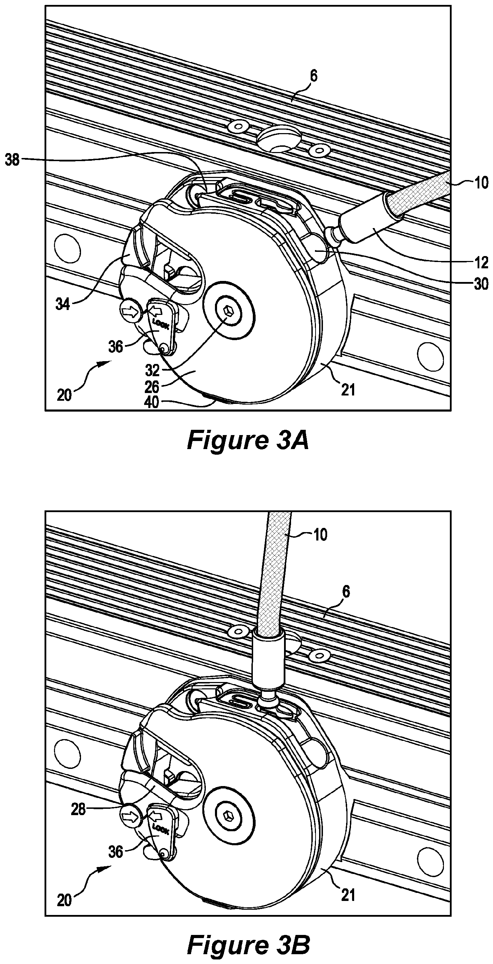

Figure 3A is a side view of the descender, illustrating a keyway for accepting the rope termination;
Figure 3B is a side view of the descender, illustrating the rope termination secured within the keyway;
Figure 4A is a perspective view of the life-line rope being coupled to the rope guide;
Figure 4B is a perspective view of the rope guide in an open configuration, illustrating the arc-sheave of the guide;
Figure 4C is a perspective view of the rope guide in a closed configuration, retaining the life-line rope about the guide;
Figure 5A is an exploded perspective view of the descender and the internal components thereof;
Figure 5B is a front view of the internal components of the descender in a locked configuration;
Figure 5C is a front view of the descender in a released configuration;
Figure 5D is a front perspective view of the internal components of the descender in a released configuration, illustrating the cord engagement notch;
Figure 6A is a perspective view of the descender with a release lever in an unlatched position;
Figure 6B is a perspective view of the descender with an outer cover of the descender rotated in a clockwise direction to partially expose a life-line rope receiving inlet;
Figure 6C is a perspective view of the life-liner rope being introduced into the receiving inlet of the descender;
Figure 6D is a perspective view of the outer cover of the descender rotated clockwise to trap the life-line rope within the receiving inlet of the descender;
Figure 6E is a perspective view of the life-line rope exiting the descender from an outlet of the descender, having been laid into a horse-shoe channel within the descender by the continued rotational motion of the outer cover;
Figure 6F is a perspective view of the life-line rope fully coupled with the descender, the life-liner rope retained in the receiving inlet, and the exiting life-line rope ready to be tensioned against the descender;
Figure 7A is a perspective view of a keeper hook, that is stored on the life-line rope to mark a harness attachment region thereof;
Figure 7B is a perspective view of a work positioning hook engaged with the fall-arrestor immediately prior to engagement with the fall control ladder;
Figure 7C is a perspective view of a user harness interconnected via a closable hook or carabiner to the fall-arrestor, which is in turn engaged via the work positioning hook to a rung of the fall control ladder;
Figure 8A is a perspective view of an upper tether in a storage configuration, mounted to a rear face (wall facing) side of the fall control ladder;
Figure 8B is an enlarged view on the upper tether of Figure 8A, illustrating a locking lever of the upper tether to facilitate tensioning of a tether rope;
Figure 8C is a front view of the internal components of the upper tether, illustrating a rope ratchet mechanism in a released configuration;
Figure 8D is a front view of the internal components of the upper tether, illustrating the rope ratchet mechanism in a locked configuration;
Figure 8E is a perspective view of the upper tether, illustrating a carabiner storage hook for securing a tether rope when not in use;
Figure 9A is a perspective view of a lower tether, illustrating a tie-off point for the tether rope and an open storage hook;
Figure 9B is a schematic illustration of the tether rope in a stowed configuration attached to a base portion of the ladder;
Figure 10A is a perspective view of the fall control ladder tethered to a fixed, wall mounted tether point, the tether rope engaging the upper and lower tethers on a first stile of the fall control ladder;
Figure 10B is a schematic view of preferred attachment distances for the tethering of the fall control ladder;
Figure 10C is a schematic representation of the ladder tethered to a ground anchor, and two arrows to indicate the common failure modes of the ladder, in use;
Figure 10 D is a perspective view of the ladder with arrows to indicate the lateral movement reduced by the tether system fixed to a ground anchor;
Figure 11A is a perspective view of the tensioned life-line rope being released in a controlled manner through the descender; and
Figure 11B is an enlarged view of the descender in Figure 11A, illustrating an operator actuating the thumb lever of the descender to allow the life-line rope to slacken off and allow the stranded user to descend.

The invention will now be described more fully hereinafter with reference to the accompanying drawings, in which various embodiments, although not the only possible embodiments, of the invention are shown. The invention may be embodied in many different forms and should not be construed as being limited to the embodiments described below.

### DETAILED DESCRIPTION OF EMBODIMENTS

While the invention is described herein in relation to a ladder, the invention is also applicable, however not forming part of the claimed subject-matter, to extendable platforms and elevated work platforms, cheery-pickers, scissor lifts and other machines that allow operators to work on elevated areas.

The following term *"hook"* is understood herein to refer to fixed hooks and specialised closable hooks, such as carabiners having an openable or spring loaded or screw-locked gate for forming reversible couplings.

With reference to Figures 1A-1C, there is illustrated a ladder having a fall control system 100, comprising: a ladder 1; a tensioner 20 mounted towards a bottom end 3 of the ladder 1; a mount 9 located towards a top end 4 of the ladder 1; a cable illustrated as a rope, or cord 10 that extends from the tensioner 20 and over the mount 9 in a looped configuration; and an arrestor 15 movably engaged with the cord 10 for coupling a user U to the cord 10, wherein the tensioner 20 has a locked configuration for holding tension on the cord 10 to support a weight of the user U and an open configuration for allowing the cord 10 to pass through the tensioner 20.

The tensioner is illustrated in the following Figures as a descender 20. The descender 20 is rigidly fixed to the ladder and does not move with the movement of the user U.

The descender 20 may be detachable from the ladder to facilitate maintenance or replacement.

The ladder 1 of Figure 1A is an extendable ladder having a base portion 1a and a fly portion 1b. Although not illustrated, additional moveable, fly portions can be added to the ladder 1 to increase the available extension. Accordingly, the cable, illustrated as cord 10 of the fall control ladder 100 is configured to adjust as the ladder 1 is extended during use. It is also contemplated that the cord 10 could be adapted to a non-extending ladder 1 of fixed height, where the cable forms a closed loop or winch 5 routed through the descender 20 and up and around the upper mount 9 using and a looped cord 10 of fixed length.

For a non-extendable ladder 1, the cord 10 may be a closed loop that runs through the descender 20 and over the second mount 9. The user will connect to the cord 10 via an arrestor 15 and can only travel to the upper end 3 of the ladder 1. If the user becomes incapacitated, a third-party operator can use the descender 20 in the manner described herein to lower the user on the cord 10, via the arrestor 15 back towards the lower end 3 of the ladder 1 and the ground G upon which it is resting.

The cord 10 described herein is looped between the descender 20 and the second mount 9 with a free end 10c, to allow the cord 10 to extend as the extendable ladder 1 increases in length. The selected cord 10 must provide sufficient length of cord 10 for twice the maximum height of the ladder (at full extension) and a further length of the ladder (at full extension) being the surplus cord 10 required to descend an incapacitated used back to the ground G on which the fall control ladder 100 is supported.

To minimise snagging and tripping hazards around the ladder 1, the unused cord 10 is stored in a cord bag 11. The bag 11 is open ended and allows the cord 10 to be smoothly drawn from the bag 11 as the ladder 1 is extended. When the fall control ladder 100 is not in use, the cord 10 can be stored entirely in the bag 11 to prevent the cord 10 from being lost or damaged.

The bag 11 can be coupled to the ladder 1 and stowed between subsequent the rungs 6 for ease transport. This ensures that the bag 11 and contained cord 10 travel with the fall control ladder 100. Once the ladder 1 is in location, the bag 11 can be unclipped and released from the ladder 1 for ease of use.

Advantages of the cord 10 being separable from the fall control ladder 100 provide that the cord 10 can be easily changed or replaced. Moreover, the cord 10 can be checked as frequently as required to ensure that the cord 10 has not been frayed or damaged and still maintains the desired load rating. The bag 11 also affords protection for the cord 10 when not in use. Where cords 10 are permanently attached to a ladder 1, it is awkward to remove the cord for inspection and replacement, often leading to cords 10 falling into a poor state of repair, particularly where a ladder 1 is left outdoors in wet conditions or extreme sunlight.

The descender 20 is positioned at the lower, first end 3 of the ladder 1 to provide access to a user U and an operator O from the ground G (the substrate upon which the ladder 1 is supported). In Figure 1A, the descender 20 provides a controllable braking mechanism permanently affixed to a first rung 6 of the ladder 1. The ladder 1 of Figure 1A further comprises a pair of movable, levelling legs 8 for additional stability of the ladder 1, and rubberised feet 8a.

Levelling legs 8 provide a base of support of approx. 1.3m or 1.6m for ladders beyond 6.4m extended length. The legs 8 provide sufficient stability for a fall event of a user over the side of the ladder to remain upright during and after the fall event. New international standards require extra stability for all ladders, such as EN131-2 2017 and AS NZS 1892.1 2018.

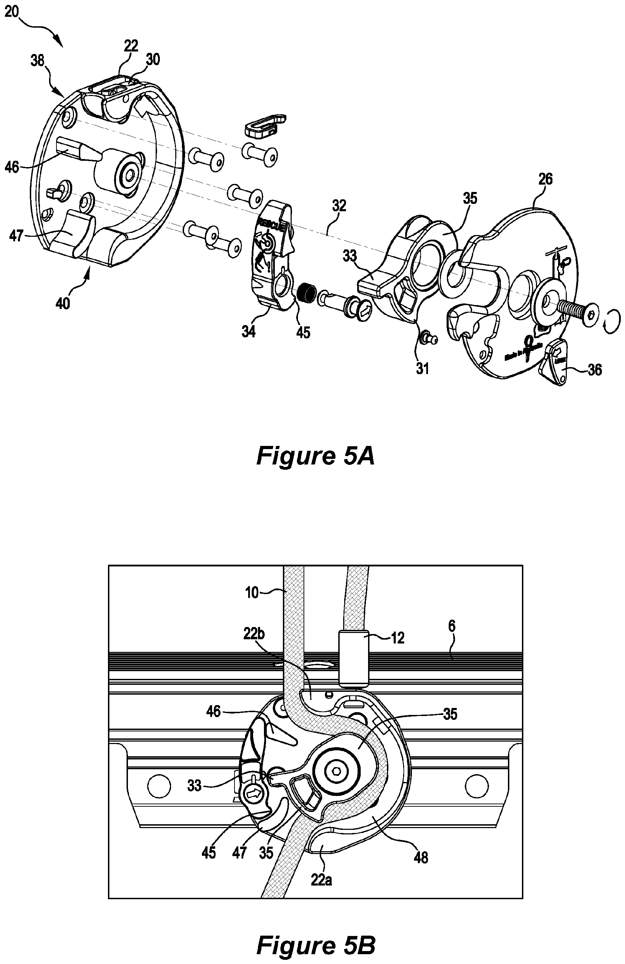

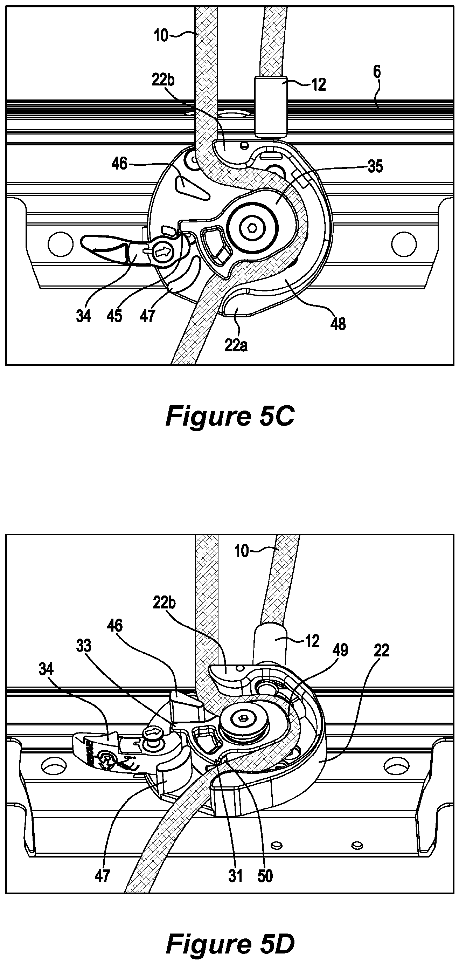

The descender 20 will be described in more detail in relation to Figures 5-6.

Figure 1C illustrated a second, upper end 4 of the ladder 1 and a second, upper mounting point 9 for the winch 5. The upper mounting point 9 is a smooth arc-sheave about which the cord 10, or life-line rope is partially wound, that acts as an upper guide for the winch 5. As the ladder 1 is extended the upper mount 9 allows the cord 10 to run freely thereabout, extending the winch 10 simultaneously with the ladder 1.

The upper mount 9 is closable, to ensure that the cord 10 can be wound about the sheave and then captured to prevent the cord from slipping off or away from the upper mount 9.

Also illustrated in Figure 1C is an intermediary mount 13. The intermediary mount 13 provides a closed eyelet that a user can lock into, when the user reaches the desired working height on the ladder 1. A work positioning hook 18 can be attached to the intermediary mount 13 without hampering the movement of the arrestor 15 and cord 10. Once the work positioning hook 18 is engaged with the intermediary mount 13, the user is limited in their reach away from the centre of the ladder 1 preventing overstretching and potential overbalancing of the fall control ladder 100.

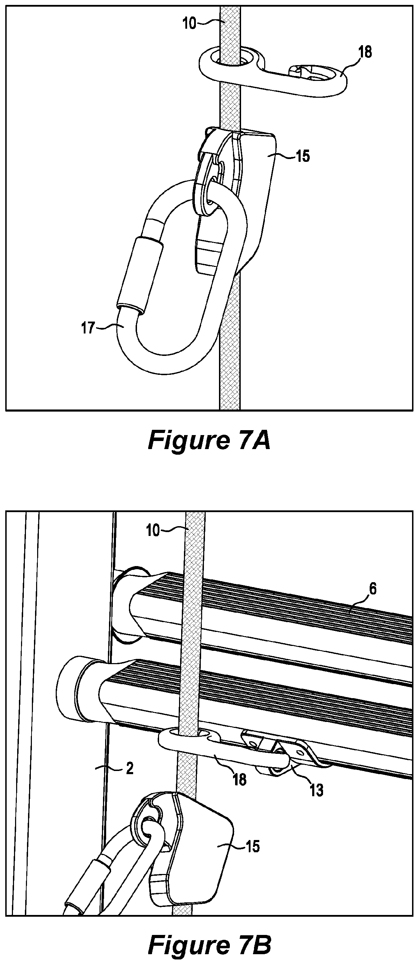

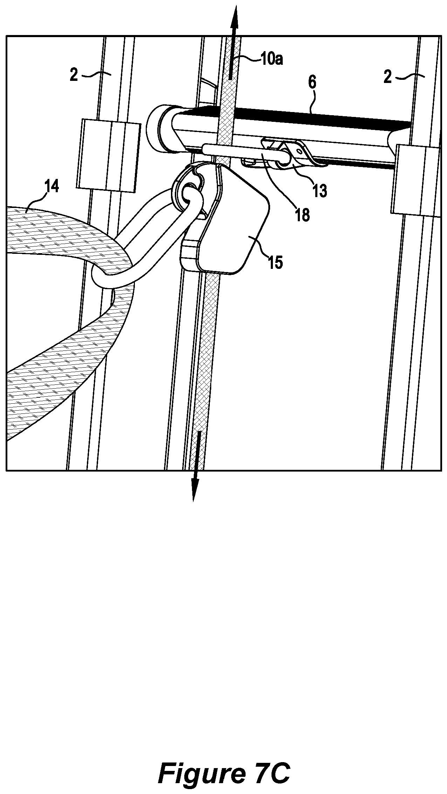

The work positioning hook 18 will be described in more detail in relation to Figure 7.

The work positioning hook 18 is configured as a figure-8, having each of the looped ends of the figure-8 being open to allow the looped end to be easily engaged and disengaged with the cord 10 with a twisting motion of the work positioning hook 18.

Figure 1B illustrates an arrestor 15 (also referred to as a rope grab) that can travel along the cord 10 and provide the ability to selectively lock to the cord 10 at any given location on the cord 10. When a user plans to ascend the ladder 1, the arrestor 15 provides a connection point between the user U and the cord 10. Preferably, the user will wear a body harness 14 and use a hook or carabiner 17 on the harness to securely engage with the arrestor 15.

In the event of a fall, the user will be held in the harness 14 attached to the cord 10 at the level of the arrestor 15.

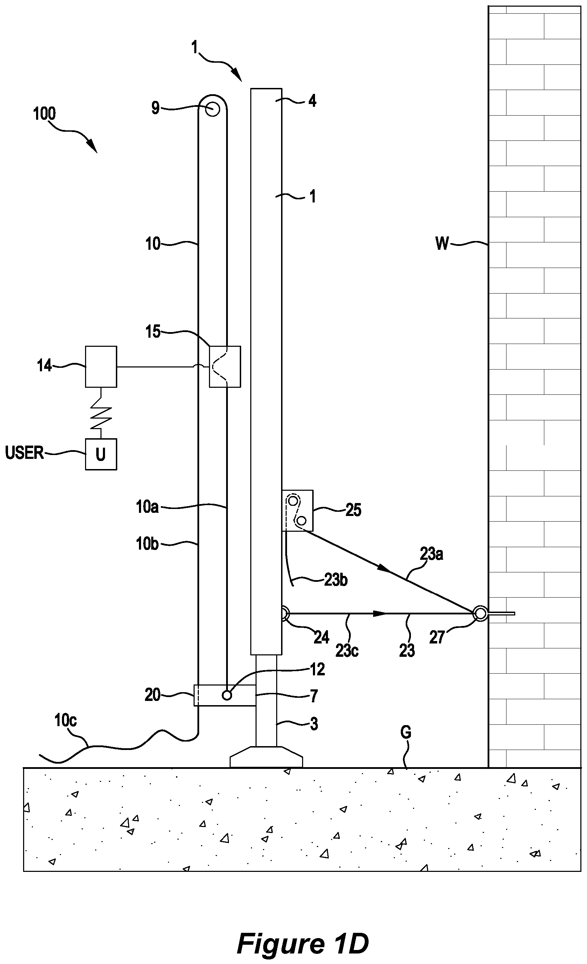

Figure 1D is a schematic illustration of the fall control ladder 100, illustrating the connections between the cord, the ladder 1, the harness 14, the arrestor 15 and the descender 20.

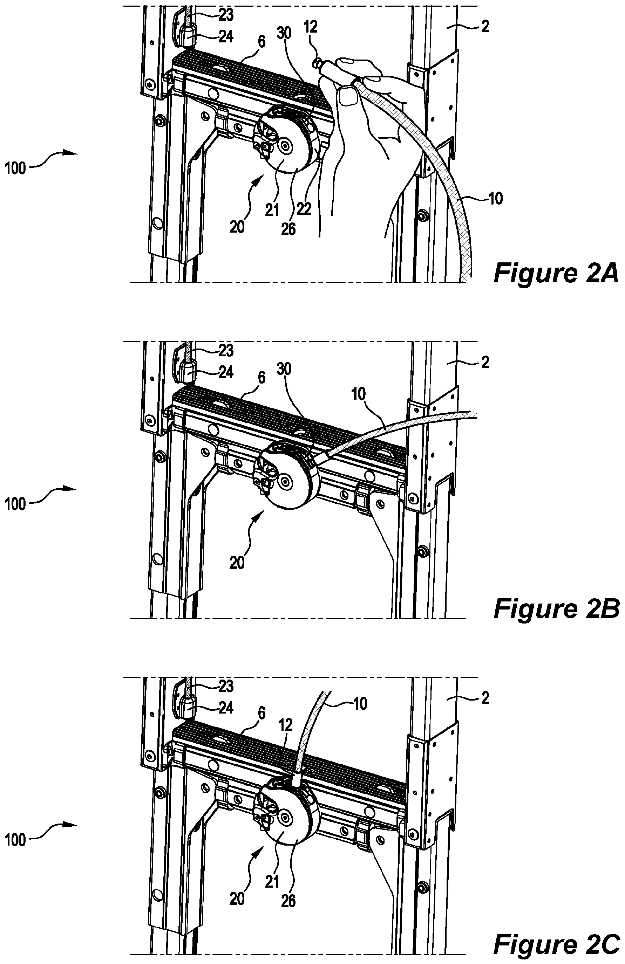

To allow for the extension of ladder 1, the winch is not formed of a closed loop in this embodiment. Instead a termination end 12 of the cord 10 is fixedly mounted to the descender 20. The termination end 12 can be formed or metal coated to provide a reliable and engageable connection to the descender 20 (illustrated in Figures 2A-2C).

The cord 10 is extended upwardly along the ladder 1 and received and secured into the second mount 9. This length of the cord 10 extending upwardly from the descender 20 to the second, upper mount 9 is length 10a.

The cord 10 further extends from the upper mount 9 back along the ladder 1 to the descender 20, this length of the cord 10 is length 10b.

As best shown in the schematic illustration of Figure 1D, the arrestor 15 is attached to length 10a of the cord 10. The user engages their body harness 14 (partially illustrated in Figure 7C) to the arrestor 15 as they ascend the ladder. In a stationary location the arrestor 15 grabs the cord 10 and retains the user's location on the cord 10. In the event of a fall, the operator O can release the cord in a controlled manner through the descender 20, to bring the user via the arrestor 15 back towards the ground G. In this configuration, the users weight is acting on the cord 10 to bring the user downwards, while the operator O uses the descender 20 to control the rate of descent.

Also illustrated in Figure 1D is a tether system that can be integrated into the ladder 1. The tether system comprises a first coupling 24 located towards a first end of the ladder 3; a brake 25 located towards a second opposing end 4 of the ladder 1; and a tether cord 23 fixed to the first coupling 24, and extending to the brake 25 via a tether point 27, wherein the brake 25 allows movement of the tether cord 23 in a single direction only, such that the tether cord 23 can be tensioned against the tether point 27, to apply a horizontal force F_{H} pulling the ladder 1 toward the tether point 27 and a vertical force Fvthat pulls the ladder 1 toward the ground G (or alternative support surface).

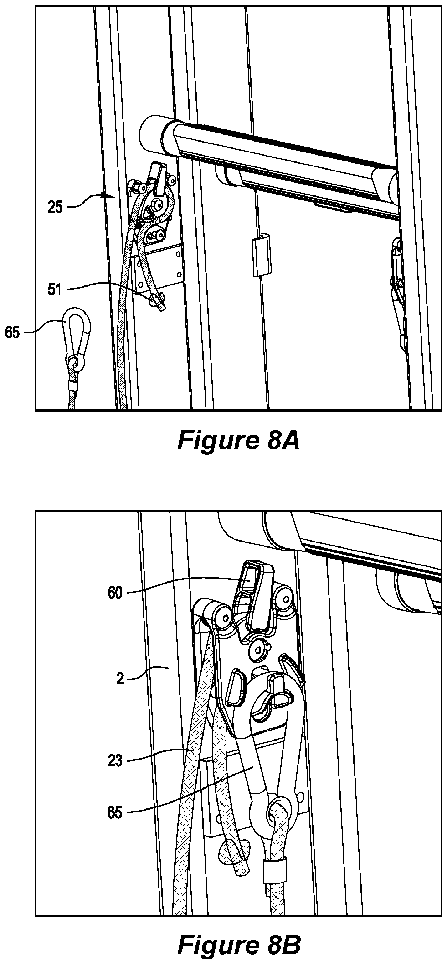

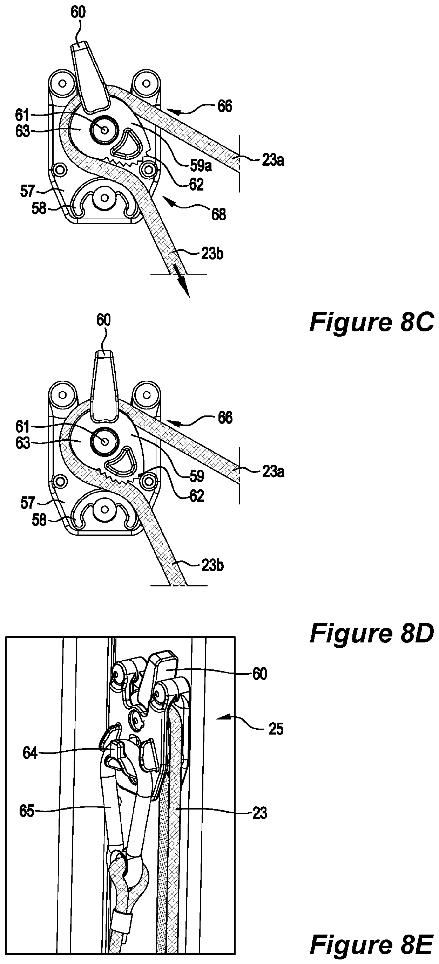

The tethering ladder will be described in more detail in relation to Figures 8-10.

### Fall control ladder

The ladder 1 is rated between 150-160Kg depending on the exact build specification of the ladder 1. When ladder 1 is modified to become a fall control ladder 100 the overall system rating is reduced to about 120 Kg due to the load rating on the descender 20.

Preferably, the fall control ladder 100 is always used in conjunction with the tether cord 23 as described herein. An additional top lash mounting can also be used, when the fall control ladder 100 is being supported against a pole or pole-like structure.

Using a set of levelling legs 8 on the fall control ladder 100 further provides a stability to the base 3 of the ladder 1 to improve the overall safety of the fall control ladder.

The work positioning hook 18 provides a still further safety feature to prevent a user from overreaching and overbalancing the fall control ladder 100. Although Figure 1C illustrates the intermediary mount 13 on a rung below the second, upper mount 9, it is contemplated that the fall control ladder 100 will have intermediary mounts 13 located on a front side of the ladder (user facing side) below each rung 6, to provide cooperative mountings for the work positioning hook 18 are a plurality of spaced intervals along the stiles 2. The user is intended to attach the work positioning hook 18 to the nearest rung 6 above their location, to constrain the cord 10.

To start using the fall control ladder 100, the cord 10 is removed from the bag 11 and connected to the descender 20.

The descender 20 is permanently fixed to the fall control ladder 100. The descender has a cylindrical body 21 having a peripheral outer wall 22, and a disc-like cover 26 (see Figure 2A).

The peripheral surface 21 provides a keyed-hole 30 for receiving the termination end 12 of the cord 10. The termination end 12 is inserted into the keyed-hole 30 at about 2'o'clock (if looking straight at the descender 20) as illustrated in Figure 2B. Once inside the keyed-hole 30, the termination end 12 is rotated anti-clockwise, towards 12'o'clock (brining the cord 10 into alignment with a longitudinal axis of the fall control ladder 100). In this aligned position the termination end 12 cannot be released from the descender 20 and effectively anchors the cord 10 to the descender 20, illustrated in Figure 2C. A spring and ball detent (not illustrated) can be incorporated into the keyed-hole 30 to provide resistance to the termination end 12 sliding out of position. This spring is contemplated to be simple leaf spring or coil spring, or wave spring in final design. The spring will be easy to overcome by hand force but sufficient to prevent the termination end 12 coming lose or falling out when tension is removed from the cord 10.

To mount the cord 10 to the fall control ladder 100, first the termination end 12 of the cord 10 is inserted into the keyed-hole 30 of the descender 20 and rotated into alignment with the longitudinal axis of the ladder 1.

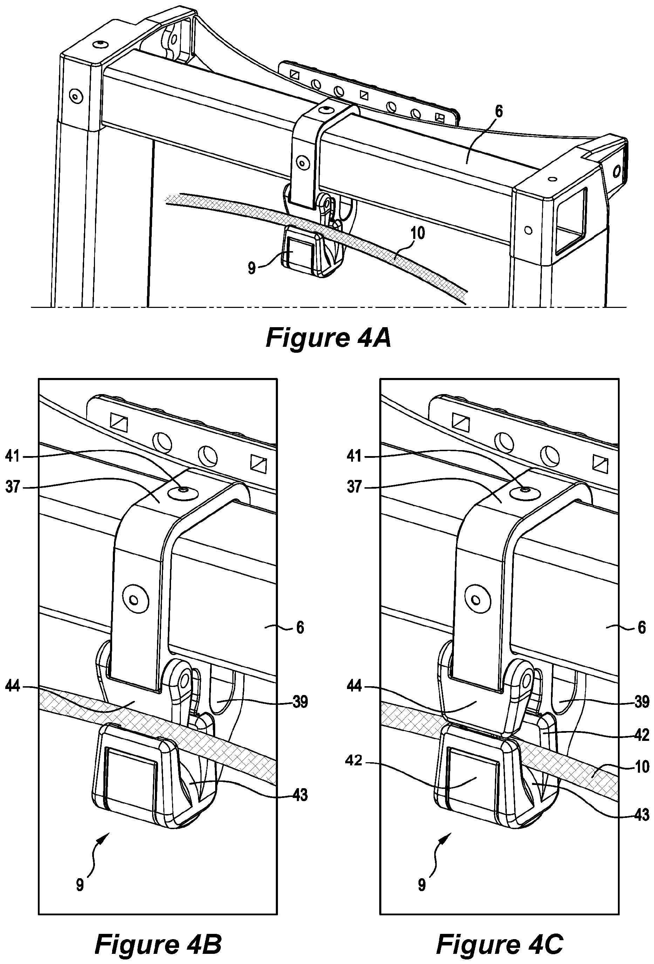

Next, the cord 10 is drawn along the longitudinal axis of the ladder 1, and drawn around a circular sheave 43 of the upper mount 9, see Figure 4A. The upper mount 9 comprises a hanger 37 that is suspended from an upper run 6 of the ladder 1. The hanger 37 can be secured to the rung 6 with a fastener 41 such as a bolt, pin, rivet or the like. The rung 6 to which the hanger 37 is engaged, will be reinforced and therefore, stronger than the lower rungs 6 of the fall control ladder 100. The hanger 37 will support between 400kg-500kg load from cord 10a (the side of the cord 10 to which the arrestor 15 and user are attached). The hanger 37 will support between 250kg-350kg load from cord 10b on the other side of the sheave 43. This places the working loads on the hanger 37 between 650kg-850kg, where the fixed sheave friction helps reduce total loads on the hanger 37 and therefore through the fall control ladder 100. The cord 10 is designed for about 12kN in line with many international fall protection standards.

The hanger 37 comprises an open hook 42 for receiving the cord 10, the sheave 43 being formed around the bend in the hook 42, to smoothly guide the cord 10 about the hook 42. The hanger 37 also comprises an aperture or eyelet 38 for mounting supplementary systems to the ladder 1, such as a pulley system or hoist. The eyelet 39 can also be used for a top lashing point to a pole or wall W to further stabilise and tether the fall control ladder 100.

Above the hook 42 is a pulley-gate or closer 44, which may be spring-loaded or simply rotated back and forth. It is contemplated that the closer 44 will not be loaded during use of the fall control ladder 100, however the closer 44 must be sufficiently stiff, that a knock from the cord 10 will not open the hook 42 allowing the cord 10 to disengage with the upper mount 9, during use.

The cord can be threaded around the sheave 43 in an anti-clockwise or a clockwise direction.

At this time, the fall control ladder 100 is righted and moved into the desired work position. At this point supplementary support systems may be deployed such as stabilising legs, tethering systems, anchors etc. The fall control ladder 100 should not be supported in an upright position, immediately adjacent the work area to be accessed.

### Stationary descender (rope tensioner) 20

The descender 20 is illustrated in exploded Figure 5A, illustrating all of the components therein.

The descender comprises a cylindrical body 21 sealed with a disc-like closing plate or outer cover 26. The body 21 is rigidly mounted to the fall control ladder 100 at a lower end 3, such that a user or operator can access the descender 20 from the ground G. The outer cover 26 is rotatably mounted to the descender body 21 and is co-axially aligned to rotate about the body 21 around a central axis 32.

The outer cover 26 comprises a slot 28. As the cover 26 is rotated about the body 21, the slot 28 can be brought into alignment with each of an inlet 38 for the cord 10 and an outlet 40 for the cord 10.

Also situated on the outer cover 26 is a locking member, illustrated in Figure 5A as a thumb lever 36, which locks the outer cover 26 to the body 21 and prevents rotation of the cover 26 relative to the body 21. The thumb lever 36 and a release lever 34 must be activated simultaneously to enable the cover plate 26 to rotate from its home position. This provides a double-action that is required to release the descender 20 as a safety feature that guards against accidental activation of the release.

The body 21 has an outer wall 22 in which the keyed-hole 30 is located for receiving the termination end 12 of the cord 10. The outer wall 22 is not continuous and provides a first opening for the cord inlet 38, a second opening for the cord outlet 40 and a third outlet bridged by a release lever 34. The release lever 34 is pivotally mounted to the body 21 and when bridging the surface 22 of the body 21, locks the cord 10 within the descender 20. When the release lever 34 is pivoted away from the outer wall 22 to an approximate 90 degrees angle, extending away from the body 21, the descender is released and the cord 10 is free to move through the descender 20.

Inside the body 21 of the descender 20 is a channel 48. In the descender 20 of Figure 5, the winding channel 48 turns between the cord inlet 38 and outlet 40. The cord 10 as it passes through the channel 48 is wound partially about a locking member 35.

The channel 48 changes direction within the body 21 of the descender 20 three opposing times. The first turn is immediately on entry to the channel 48. The channel 48 then takes a second turn about a large U-bend around the locking member 35. The third and final turn is a tight turn immediately adjacent the outlet 40. These three turns result in an Ox Bow shape to the channel 48.

The locking member 35 is coaxially aligned to rotate about the central axis 32 of the descender 20, which allows the locking member 35 to pivot between a locked position (Figure 5B) and a released position (Figure 5C).

The locking member 35 is shaped like a guitar-body. The locking member 35 has a large rounded base portion that forms the U-bend (or pulley) about which the cord 10 is looped. The base portion can be shaped to provide a smooth arc sheave 49 that the cord 10 passes around between the inlet 38 and outlet 40. The sheave 49 can be V-shaped providing a recess in which the cord 10 sits around the base of the locking member 35.

On an opposing side of the locking member 35 there is provided a nose 31. The nose 31 protrudes from the locking member 35 towards the outer wall 22 of the body 21, and imposes on the channel 48 adjacent the cord outlet 40. A bulging portion 22a of the outer wall 22 protrudes into the channel 48 immediately adjacent the outlet 40 to further shape the channel 48 into the Ox Bow shape. The bulge 22a forms a pinch point on the cord 10 in conjunction with the nose 31. A corresponding bulge 22b is also configured immediately adjacent the cord inlet 38, protruding into the channel 48. This forces the cord 10 into a tight bend immediately on entering the channel 48, to provide control of the cord 10 movement through the channel 48.

The nose 31 further comprises a notch 50, shown in Figure 5D as a V-shape notch that is forced against the cord 10 as the nose 31 is pushed outwardly toward the bulging form 22a of the outer wall 22. The nose 31 of the locking member 35 in conjunction with notch 50 traps the cord 10 against the bulge 22a in the outer wall 22 preventing the cord 10 from traveling through the descender 20.

An increasing load on the cord 10 places an increasing load on the nose 31, as the cord 10 travels around the channel 48. Accordingly, the higher the load, the more force applied to the cord 10 and the more friction in the descender 20, providing a tighter grip on the cord 10. In some embodiments, it is contemplated that the notch 50 can be tailored in shape and dimensions to provide a specific grip for a specific system allowing a fine tuning of the fall control ladder 100.

The locking member 35 further comprises a shoulder 33 located on a periphery of the locking member, away from the nose 31 and the arc sheave 49. The shoulder 33 extends radially outwards away from the central axis 32 and towards the release lever 34 in the wall 22 of the body 21.

As the release lever 34 is pivoted away from the body 21, a distal lip 45 of the release lever 34 is brought into contact with the nose 31 of the locking member 35. The distal lip 45 thus rotates the locking member 35 and pulls the nose 31 away from the outer wall 22 of the body 21, thereby puling the nose 31 off the cord 10. As the nose 31 lifts, the notch 50 is lifted off the cord 10, the friction on the cord 10 reduces and the cord 10 is free to move along the channel 48 and through the descender 20.

Also, within the body 21 of the descender 20 are a pair of cord guides, an upper guide 46 and a lower guide 47. The upper guide 46 is located between the release lever 34 and the cord inlet 38 and guides the cord 10 into the channel 48. The lower guide 47 is located between the release lever 34 and the cord outlet 40 and guides the cord 10 out of the channel 48.

When the descender 20 is to be locked, the release lever 34 is pushed back toward the body 21 and into position within the wall 22. The release lever 34 can be spring-loaded such that as soon as pressure is released from the lever 34, the lever 34 will return to the locked configuration, in place in the wall 22 of the descender 20.

### Complete descender roping

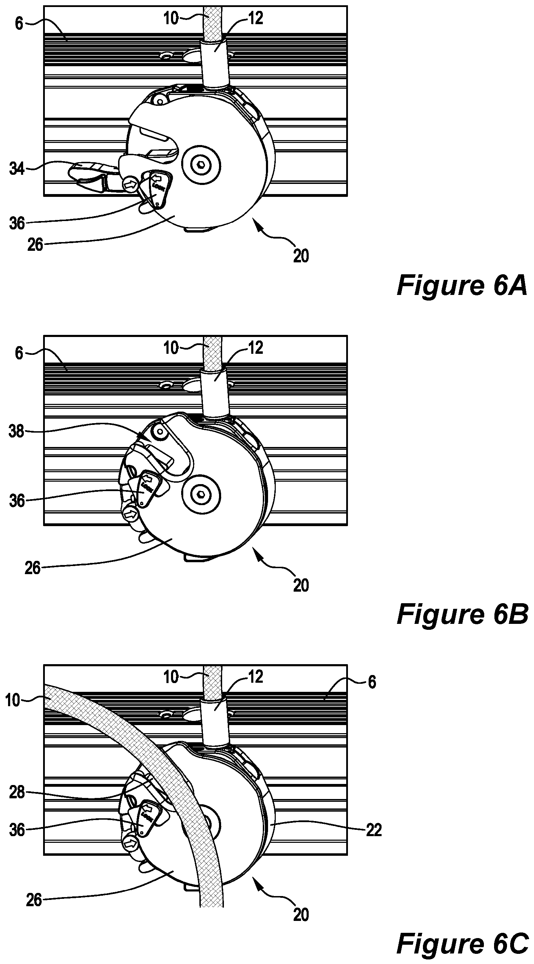

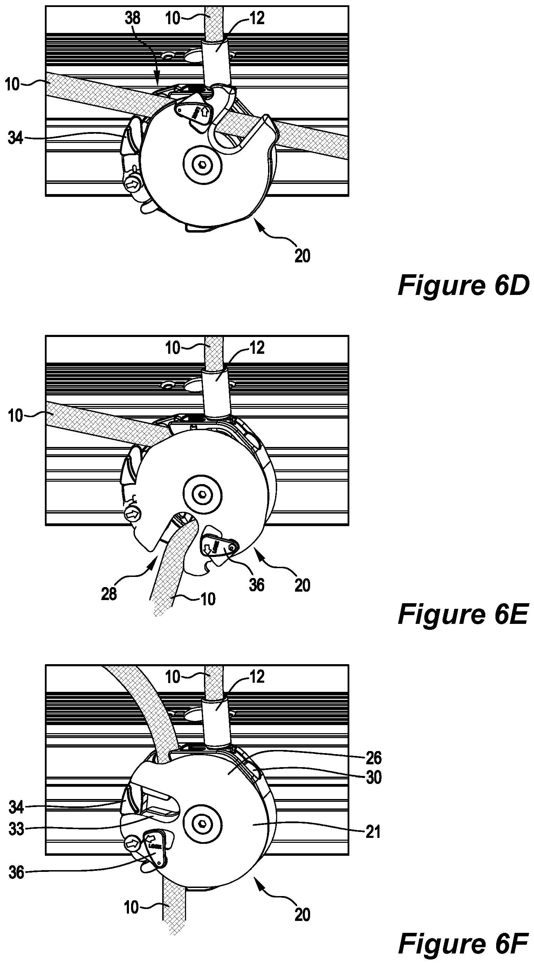

The following steps are taken to thread the cord 10 through the channel 48 of the descender 20:
a) the cover lock 36 is released, to allow the cover 26 to rotate (Figure 6A).
b) The release lever 34 is unlatched (Figure 6B).
c) Twist cover 26 clockwise to align the slot 28 with the cord inlet 38 (Figure 6C).
d) Create 20cm of slack in the cord, then insert cord 10 rope into the inlet through the slot 28 with a thumb (Figure 6D).
e) Continue to turn cover plate 26 clockwise until the slot 28 is aligned with the outlet 40 and the cord exits the channel 48 (Figure 6E).
f) Pull down on cord 10 (away from the descender 20) to make sure it exits the descender.
g) Continue to turn cover plate 26 anti-clockwise back to its starting point.
h) Click the cover plate into place and check that it can no longer rotate.
i) Pull down on cord 10 from below the descender to removed slack in the cord 10 (Figure 6F).

### Work positioning system - use of ladder

Illustrated in Figure 1B is a work positioning hook 18, that is located in proximity to the arrestor 15 on the cord 10. Also illustrated in Figure 1B is a keeper hook (illustrated as a carabiner 17) attached to the cord 10 to mark the correct attachment location on the cord 10 (particularly the cord 10a that extends upwardly from the termination end 12 toward the second, upper mount 9). If a user accidentally attached the arrestor 15 to the cord 10b, releasing the cord 10 through the descender 20 will not arrest the user as anticipated. Additionally, it will not facilitate the lowering of an incapacitated user.

To engage the user with the Fall control ladder 100, the following steps are required:
a) Unclip keeper hook 17 from the cord 10 (see Figure 7A).
b) Attach user's chest harness 14 point to the arrestor 15. The arrestor 15 should not be connected via a lanyard or shock pack as this will increase the possible fall distance for the user and can overload the fall control ladder 100. The maximum gap between the user's chest and the arrestor 15 should be about 30cm.
c) Test the harness 14 to arrestor 15 connection before climbing the fall control ladder 100 by hanging in the harness 14 from the cord 10 via the arrestor 15 before ascending the fall control ladder 100.
d) Once the desired work height on the ladder 1 has been reached, attached the work positioning hook 18 to a rung hook (illustrated in Figure 7A as a closed eyelet 52) above the harness 14 attachment point (see Figure 7B).
e) Remove slack in the cord 10 by holding the arrestor 15 under the rung hook (eyelet 52) and pulling the cord 10 through the arrestor 15 (see Figure 7C).
f) If performing pole work a top-lash between the fall control ladder 100 and the pole is also advised for safety. This can be achieved through the eyelet 39 on the hanger 37.

Connecting the work positioning hook 18 with the eyelet 52 will comfortable support the user laterally, allowing the user to easily use two hands whilst performing work from the ladder 100. The work positioning hook 18 limits the reach of the user from the centre of the fall control ladder 100. This reduced the opportunity for the user to overreach and destabilise the fall control ladder 100 while supported thereon. The work positioning hook 18 is not a component of the fall arrest system but provides safety benefits to the fall control ladder 100 by aiding in loading the system centrally and prevents user falling sideway to a greater degree.

### Tether system - optimal safety

A tether system is advised to improve the stability of the ladder footing and to tether the ladder 1 to a fixed anchor point. The tether system provides a safety improvement whether applied to a ladder 1 or a fall control ladder 100.

The tether system described herein is integrally mounted to the stiles 2 of the ladder 1 and are thus always to hand when required. As the tether system is integral to the ladder, there are a number of stowage features to stow the tether system when not in use or when the ladder 1 is in transit. As the tether system is always available it is more likely to be deployed and becomes integrated into standard work practices.

The tether system requires an anchor illustrated as tether point 27 to tether to. This may be a temporary fixing such as a pile of stake or can be a permanent fixing such as bolt or ring sunk into the concrete of the wall W or the ground G.

The ladder 100 having a tether system for tethering to tether point 27, comprising: a ladder 1; a brake 25 mounted towards an upper end 4 of the ladder 1; a coupling 24 mounted towards a bottom end 3 of the ladder 1; and a cord 23 extending from the coupling 24 to the brake 25 via the tether point 27, wherein the brake 25 has an operative configuration for holding tension on the cord 23 against the tether point 27 and an inoperative configuration allowing the cord 23 to pass through the brake 25.

The brake 25 in the operative configuration tensions the cord 23 against the tether point 27, such that a horizontal force is applied by the cord 23 pulling the ladder 1 toward the tether point 27, and a vertical force is applied pulling the ladder 1 toward the ground G on which the ladder 1 is supported.

As illustrated in Figure 1D the first coupling 24 is mounted toward the lower end 3 of the ladder 1, and the brake 25 is mounted above the first coupling 24 towards the upper end 4 of the ladder 1. However, it is contemplated that the first and second mounting can be reversed, without departing from the tether system as described.

The brake 25 comprises a body 57 having a rope guide 58 therein. Co-axially pivoting about a rotation axis 61 is a locking member 59. The locking member 59 is not symmetrical about the rotational axis 61 and provides an offset bulging surface forming a cam 63. A first peripheral surface of the locking member 59 provides a pulley 59a, with a V-shape cut into the surface for the cord 23 to sit within. The V-shape cut helps to provide tension on the cord from the pulley 59a.

On a second peripheral surface, the locking member 59 has a plurality of teeth 62 located in opposition to the rope guide 58. The tether cord 23 is threaded through the body 57, into a tether inlet 66 over the pulley 59a of the locking member 59 past the teeth 62 and out of a tether outlet 68.

Primarily it is tension over the pulley 59a of the locking member 59 that creates the impingement on the tether cord 23. However, it is contemplated that a light spring can be added to the body 57 to keep the teeth 62 in contact with the cord 23. When a user ascends or descends the ladder 1 the vibration or bounce of the ladder 1 can release tension on the cord 23 which can allow for a slight slackening of the cords 23 against the locking member 59.

The locking member 59 also comprises a release lever 60, extending from the body 57 to be externally accessible to a user to unlock the brake 25 as required.

Illustrated in Figure 8D, the brake 25 is locked, with the release lever 60 located centrally extending from the brake 25. In this configuration, the teeth 62 of the locking member 59 are biting into the tether cord 23 against the rope guide 58 locking the tether cord 23. Tether cord 23a is illustrated entering the brake 25, while tether cord 23b is illustrated exiting the brake 25. Pulling on cord 23b (the free end of cord 23) will allow the cord 23 to flow through the second mount 23, increasing the tension in the tether cord 23a and 23c, thus increasing the forces in the cord 23c pulling the ladder 1 towards the tether point 27 and increasing the forces in the cord 23a pulling the ladder towards the ground G and the tether point 27.

Releasing the load on the cord 23b, allows the cord 23a to normalise, and as the pulling force is released on cord 23b, the cords 23a pulls in the opposing direction, momentarily, loading the cam 63 and pulling the locking member 59 anti-clockwise to bring the lever 60 back to the central position (locked), simultaneously pushing the teeth 62 toward the rope guide 58 and capturing the cord 23 therebetween. Pushing the release lever 60 away from the cords 23a, will release the brake 25 and allow the tension to drop in the cord 23 to release the tether system (illustrated in Figure 8C).

In some embodiments a spring-loaded mechanism can be used to hold and release the locking member 59 from the tether cord 23, or as illustrated in Figure 8D, the release levers 60 is pulled or pushed by a user to disengage the plurality of teeth 62 from the tether cords 23.

On the outside of the brake 25 is a stowage loop 64 for stowing a closed hook, or carabiner 65 (illustrated in Figure 8E). The carabiner 65 is used to connect the tether cord 23 to the fixed tether point 27. Alternatively, as illustrated in Figure 8A and 8B the carabiner 65 can be slotted through the brake 25 for stowage.

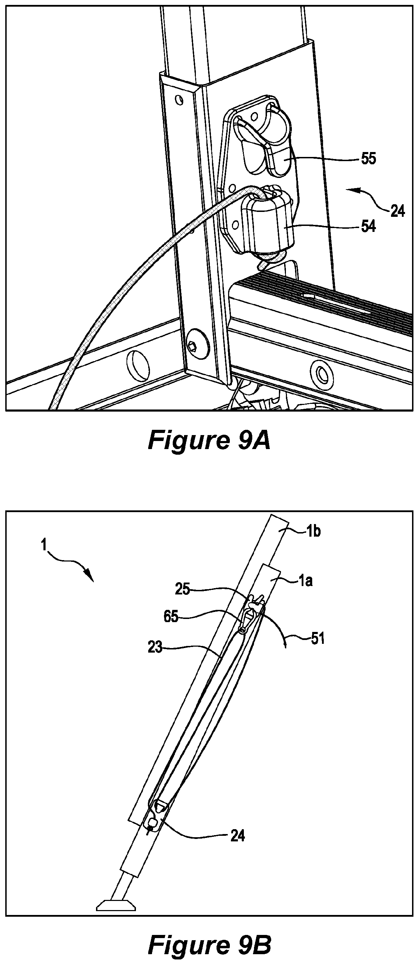

The end of the tether cord 23 is tied-off on the first coupling 24, illustrated in Figure 9A. The first coupling 24 comprises a closed eyelet as a tie-off point 54 for the tether cord 23. It is contemplated that the first coupling 24 can be configured with a keyway similar to the keyed-hole 30 for receiving a termination end of the tether cord 23. Due to the reduced loading on the tether cord 23, in this embodiment, the tether cord is knotted to the tie-off point 54. The first coupling 24 also comprises an open hook 55 for stowing the tether cord 23 with the ladder 1, when the tether system is not deployed.

Figure 9B is a schematic illustration of the tether rope 23 in a stowed configuration attached to a portion of the ladder 1. The ladder 1 of Figure 9B has a base portion 1a and a moveable portion 1b, such that the moveable portion 1b can be translated along base portion 1a, to extend the ladder 1.

The tether cord 23 is tied-off at the first, bottom coupling 24 (illustrated in perspective view in Figure (9A). The cord 23 extends from the first coupling 24 to a hook (carabiner 65) which is releasably stowed on the brake 25. After passing through the carabiner 65, the cord 23 extends along the ladder 1, back towards the open hook 55 of the first, bottom coupling 24. After passing around the hook 55, the cord 23 extends back towards the brake 25 and into the body 57 to engage with the rope guide 58 and teeth 62 of the locking member 59. A free end 51 of tether cord 23 extends from the body 57 and is pulled to tension the cord 23 against the locking member 59, thereby applying tension to each of sections 23a and 23c of tether cord 23. This tether cord 23 arrangement can be duplicated on both stiles 2 of the ladder 1 for increased stability. Each of the brake 25, first coupling 24 and all components thereof are duplicated on opposing stiles 2 of the ladder 1, although a single fixed tether point 27 can be shared between the tethers.

The first coupling 24 and the brake 25 are mounted on the rear face of the ladder 1 (the read face facing the support wall and not the user). This avoids a tripping hazard for the user when ascending and descending the ladder 1. Furthermore, this avoid entanglement of the tether cord 23 with the cord 10 of the fall control ladder 100, which is predominantly mounted on the front side of the fall control ladder 100 (that side facing the user as the ascend and descend).

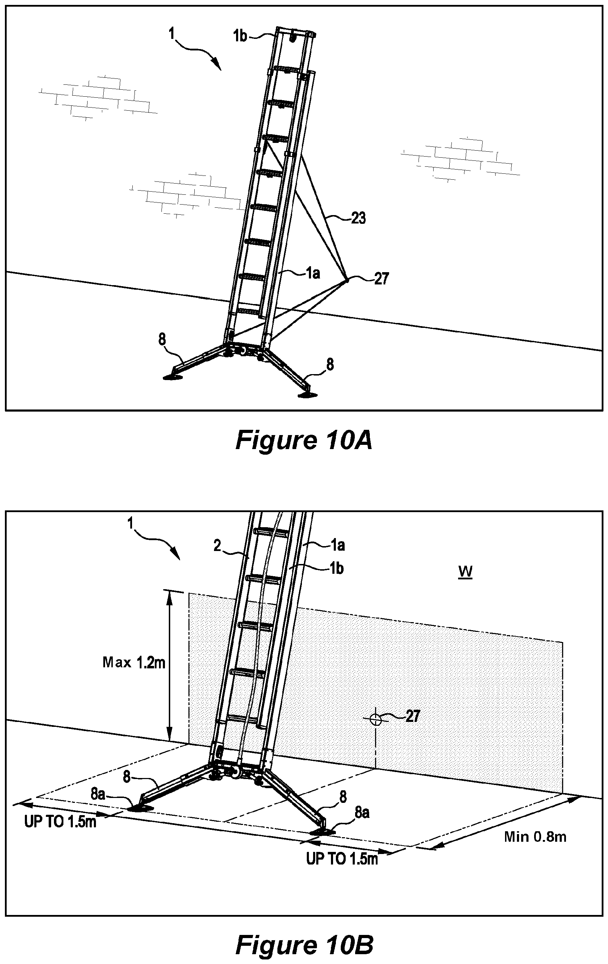

Deployment of the tether system requires the following steps:
a) Release the lever 60 (see Figure 8B) on rear side of ladder 1 and pull tether cord 23 out from stowed configuration (see Figure 8A).
b) Un-hook tether cord 23 from lower hook 55 from stowed configuration.
c) Un-clip tether hook, carabiner 65 from body 57 of the brake 25.
d) Extend the tether cord 23 to the fixed anchor point and engage the tether point 27 with the carabiner 65 (see Figure 10A) or extend tether cord 23 about a support pole.
e) Tension the tether cord 23 by pulling on the free end extending from the brake 25 and locking in position by engaging the teeth 62 with the cord 23.
f) Where a tether cord 23 is attached to both stiles 2 of the ladder 2, tension each with up to 20kg of load.
g) After use, disconnect tether cord/s 23 from the tether point 27 and store back on the ladder 1, tensioning tether cord 23 to hook 55 and stowage loop 64 so the cord/s23 are not hanging loose about the ladder 1.

When using the tether point 27 in the ground G, the attachment point should be located greater than 0.8 mm away from the ladder feet 8.

Recommended anchoring parameters are illustrated in Figure 10B. When connecting to the tether point 27 in a wall, the tether point 27 should be located between 0-1.2m from the ground G (illustrated in Figure 10B as the shaded wall region). The tether point 27 should be capable of sustaining a tension of about 100kg. The tether point should be tested, to 100kg (1000N) before use, to validate the system before the user leaves the ground. The feet 8a of the ladder 1 should be placed not less than 0.8 m away from the wall, as indicated in the broken line (dot-dashed line) of Figure 10B.

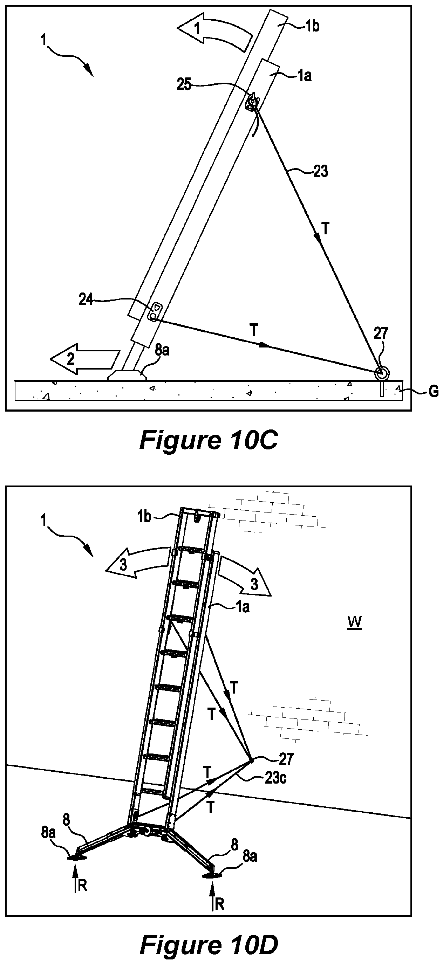

Figure 10C is a schematic representation of the ladder 1 tethered to a ground anchor shown as tether point 27, and two arrows to indicate the common failure modes of the ladder, in use. The first mode of failure shown by arrow (1), where the unsupported top end 4 of the ladder 1 rotates away from the support wall W, allowing the ladder 1 to fall backwards.

The second mode of failure shown by arrow (2), where the lower end 3, or base of the ladder 1, slides away from the wall W or tether point 27. Both of these failure modes are addressed by the tether system described herein.

Figure 10D is a perspective view of the ladder 1 with arrows (3) to indicate the lateral movement reduced by the tether system fixed to the tether point 27. This lateral movement can be referred to as "sway". The sway increases with distance from the ground G or substrate on which the ladder 1 is supported. The tether cord 23, once tensioned, to about 20kg, pulls the ladder 1 towards the tether point 27 in at least two directions; one substantially horizontally and one substantially vertically. This is reacted by upwards loads action on the feet 8a and legs 8 of the ladder 1, illustrated as reaction forces R. Where the ladder 1 has no moveable feet 8a or legs 8 the reaction forces will be acting on the lowest portion of the stiles 2, where they contact ground G. Where the feet 8a and legs 8 are adjustable, a broader base can be achieved to stabilise the ladder 1 and reduce sway at the upper end 4 thereof.

### Rescue method - controlled descent of incapacitated user

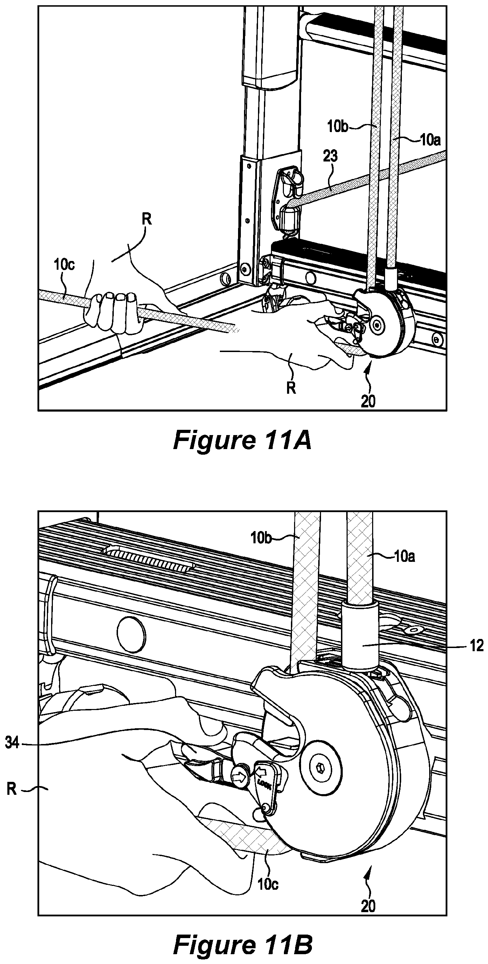

In the event that a user has lost their footing and fallen from the ladder, the cord 10 provides a life-line, and in combination with the harness 14, the arrestor 15 and the descender 20, the user will be prevented from falling to the ground, held stationary on the cord 10, and can be controllably lowered to the ground through the descender 20. Furthermore, the operator of the descender 20 (rescuer R) does not need to be elevated or to ascend the fall control ladder 100, as the operation of the descender 20 is from the ground G (or level at which the descender 20 is located towards the first end 3 of the fall control ladder 100), see Figures 11A and 11B.

Once a user U is suspended from the cord 10, their weight is acting on the chord 10a (adjacent the termination end 12 which is fixedly mounted into the descender 20). The descender 20 defaults to a locked configuration, and requires the third-party operator (or rescuer R) to release lever 34 to bring the release lip 45 into contact with the shoulder 33, to bring the nose 31 and notch 50 up and off the cord 10, allowing the cord 10 to travel through the descender 20. As the user's weight is on the chord 10a, acting downwardly, releasing the descender 20 (or brake) from the cord 10, the arrestor 15 and user will be pulled downwardly under gravitational force and the cord 10b will flow through the descender 20 upwardly towards the upper mount 9. The rescuer R uses their thumb to release lever 34 and holds the free end 10c of the chord 10 in their hand. This offers two separate controls to control the rate of the user's descent.

Depending on the nature of the accident and the condition of the incapacitated user, it is always advisable to assess the position and condition of the user before proceeding with a rescue, and where necessary contacting professional emergency services.

A method of retrieving a user from the fall control ladder comprises the following steps: tensioning the free end of the chord 10c before pivoting the release lever away from the descender 20, allowing the cord 10 to flow through the channel and thereby lowering the user attached to cord 10a via the arrestor. The speed of the user's descent can be adjusted by varying the speed that the rope flows through the user's hand. The descent can be halted at any time, by releasing the lever 34 and returning the descender to the locked configuration wherein tension on the cord 10 is maintained.

The following steps detail how to rescue a user using the fall control ladder 100 described herein:
a) Firmly hold the free end 10c of the cord 10 in hand, while partially pulling-out the release lever 34 of the descender 20.
b) Pull the release lever 34 fully down to start lowering the stranded user.
c) Control the rate of descent by varying the speed that the cord 10 passes through the hand.
d) To stop the decent, release the lever 34 to lock the descender 20.
e) Monitor the user's position and watch for possible entanglement in the tether cords 23 as the user descends towards the base 3 of the ladder 100.
f) After user is safety on the ground, remove the cord 10 using the release lever 34 to remove any tension in the cord 10, unthread the cord from the descender 20 and the second mounting point 9 and disconnect the termination end 12 from the descender 20. Stow the coiled cord 10 in the rope bag 11 provided. And if possible attach the bag 11 back between the rungs 6 of the fall control ladder 100.

It will be appreciated by persons skilled in the art that numerous variations and modifications may be made to the above-described embodiments, without departing from the scope of the following claims. The present embodiments are, therefore, to be considered in all respects as illustrative of the scope of protection, and not restrictively.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, a limited number of the exemplary methods and materials are described herein.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

### LEGEND

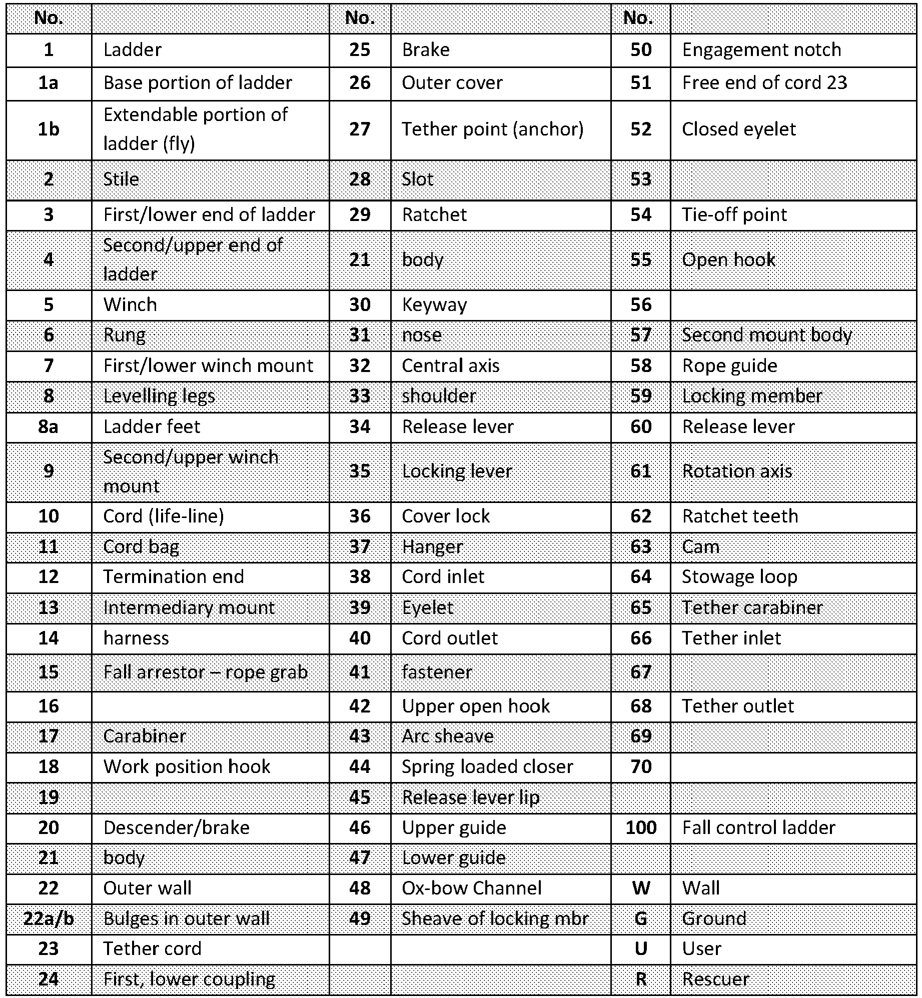

## Claims

1. A ladder having a fall control system (100), comprising:
a ladder (1);
a tensioner (20);
a mount (9) mounted towards a top end of the ladder;
a cable (10) that extends from the tensioner and over the mount in a looped configuration; and
an arrestor (15) movably engaged with the cable for coupling a user to the cable,
wherein the tensioner has a locked configuration for holding tension on the cable to support a weight of the user and an open configuration for allowing the cable to pass through the tensioner, **characterized in that** the tensioner is mounted to the ladder at a height accessible to the user from the ground on which the ladder is supported, and **in that** in the event of a fall an operator on the ground can release the cord in a controlled manner through the tensioner to bring the user via the arrestor back towards the ground.

2. The ladder of claim 1, wherein the cable comprises a fixed end securable to the tensioner and a free end that passes through the tensioner to vary the length of cable in the fall control system.

3. The ladder of claim 1 or claim 2, wherein the arrestor is couplable with a safety harness for securing the user therein.

4. The ladder of any one of claims 1 to 3, wherein the arrestor provides an active configuration where the arrestor locks onto the cable and thereby holds the user at a fixed point on the cable.

5. The ladder of any one of claims 1 to 4, wherein the tensioner is configured to receive and capture the mid-section of the cable between an inlet and an outlet of the tensioner.

6. The ladder of any one of claims 1 to 5, wherein the ladder is an extendable ladder.

7. The ladder of any one of claims 1 to 6, further comprising a tether system for tethering to an anchor, comprising:
a brake mounted towards an upper end of the ladder;
a coupling mounted towards a bottom end of the ladder; and
a cord extending from the coupling to the brake via the anchor point,
wherein the brake has an operative configuration for holding tension on the cord against the anchor and an inoperative configuration allowing the cord to pass through the brake.

8. The ladder of claim 7, wherein the brake in the operative configuration tensions the cord against the anchor, such that a first force is applied by the cord pulling the ladder toward the anchor and a second force is applied pulling the ladder toward the ground on which the ladder is supported.

9. The ladder of claim 8, wherein the first force acts in a substantially horizontal direction and the second force acts in a substantially vertical direction.

10. The ladder of any one of claims 7 to 9, wherein the brake provides an inlet for receiving the cord and an outlet by which a free end of the cord exits the brake, such that a force applied to the free end of the cord tensions the cord against the anchor, the tension on the cord being maintained by the brake.

11. The ladder of any one of claims 7 to 10, wherein the brake comprises an actuator for selecting between the operative configuration and the inoperative configuration of the brake.

12. The ladder of any one of claims 1 to 11, wherein the tensioner comprises:
a body having an inlet and an outlet interconnected by an internal channel that extends through the body for receiving the cable;
the internal channel being defined by a wall and a rotatable locking member
wherein tension on the cable in a first direction applies a force to the rotatable locking member urging the locking member into the channel and impeding movement of the cable through the channel placing the tensioner in the default locked configuration, and
wherein tension on the cable in a second opposing direction applies a force to the rotatable locking member urging the locking member out of the channel to place the tensioner in the open configuration.

13. The ladder of claim 12, wherein movement of the cable in the first direction applies the force to the rotatable locking member thereby impeding movement of the cable through the channel.

14. The ladder of claim 12, wherein movement of the cable in the second, opposing direction relieves the force on the rotatable locking member thereby clearing the channel and allowing movement of the cable through the channel.

15. The ladder any one of claims 12 to 14, wherein the internal channel is ox bow shaped.

## Patentansprüche

1. Leiter mit einem Fallschutzsystem (100), das Folgendes umfasst:
eine Leiter (1);
eine Spannvorrichtung (20);
eine Halterung (9), die zu einem oberen Ende der Leiter hin angebracht ist;
ein Seil (10), das sich von der Spannvorrichtung und über die Halterung in einer geschlungenen Konfiguration erstreckt; und
eine mit dem Seil beweglich in Eingriff stehende Arretiervorrichtung (15), um einen Benutzer mit dem Seil zu koppeln,
wobei die Spannvorrichtung eine verriegelte Konfiguration hat, um die Spannung auf dem Seil zu halten, um ein Gewicht des Benutzers zu tragen, und eine offene Konfiguration, um es dem Seil zu erlauben,
durch die Spannvorrichtung zu laufen,
**dadurch gekennzeichnet, dass** die Spannvorrichtung an der Leiter in einer Höhe angebracht ist, die für den Benutzer vom Boden aus, auf dem die Leiter abgestützt ist, zugänglich ist, und dass im Falle eines Sturzes eine Bedienperson am Boden das Seil kontrolliert durch die Spannvorrichtung freigeben kann, um den Benutzer über die Arretiervorrichtung zurück zum Boden zu bringen.

2. Leiter nach Anspruch 1, wobei das Seil ein festes Ende, das an der Spannvorrichtung befestigt werden kann, und ein freies Ende aufweist, das durch die Spannvorrichtung hindurchgeführt wird, um die Länge des Seils im Fallschutzsystem zu verändern.

3. Leiter nach Anspruch 1 oder Anspruch 2, wobei die Arretiervorrichtung mit einem Sicherheitsgurt gekoppelt werden kann, um den Benutzer darin zu sichern.

4. Leiter nach einem der Ansprüche 1 bis 3, wobei die Arretiervorrichtung eine aktive Konfiguration aufweist, bei der die Arretiervorrichtung am Seil einrastet und dadurch den Benutzer an einem festen Punkt am Seil hält.

5. Leiter nach einem der Ansprüche 1 bis 4, wobei die Spannvorrichtung so konfiguriert ist, dass sie den mittleren Abschnitt des Seils zwischen einem Einlass und einem Auslass der Spannvorrichtung aufnimmt und festhält.

6. Leiter nach einem der Ansprüche 1 bis 5, wobei die Leiter eine ausziehbare Leiter ist.

7. Leiter nach einem der Ansprüche 1 bis 6, die außerdem ein Haltesystem zum Halten an einem Anker umfasst:
eine am oberen Ende der Leiter angebrachte Bremse;
eine Kopplung, die am unteren Ende der Leiter angebracht ist; und
ein Seil, das von der Kopplung über den Ankerpunkt zur Bremse führt,
wobei die Bremse eine Betriebskonfiguration hat, um die Spannung an dem Seil gegen den Anker zu halten, und eine Nichtbetriebskonfiguration, die es dem Seil erlaubt, durch die Bremse zu laufen.

8. Leiter nach Anspruch 7, wobei die Bremse in der Betriebskonfiguration das Seil gegen den Anker spannt, so dass eine erste Kraft durch das Seil ausgeübt wird, die die Leiter in Richtung des Ankers zieht, und eine zweite Kraft ausgeübt wird, die die Leiter in Richtung des Bodens zieht, auf dem die Leiter abgestützt ist.

9. Leiter nach Anspruch 8, wobei die erste Kraft in einer im Wesentlichen horizontalen Richtung und die zweite Kraft in einer im Wesentlichen vertikalen Richtung wirkt.

10. Leiter nach einem der Ansprüche 7 bis 9, wobei die Bremse einen Einlass zur Aufnahme des Seils und einen Auslass aufweist, durch den ein freies Ende des Seils die Bremse verlässt, so dass eine auf das freie Ende des Seils ausgeübte Kraft das Seil gegen den Anker spannt, wobei die Spannung auf das Seil durch die Bremse aufrechterhalten wird.

11. Leiter nach einem der Ansprüche 7 bis 10, wobei die Bremse einen Aktuator zur Auswahl zwischen der Betriebskonfiguration und der Nichtbetriebskonfiguration der Bremse umfasst.

12. Leiter nach einem der Ansprüche 1 bis 11, wobei die Spannvorrichtung umfasst:
einen Körper mit einem Einlass und einem Auslass, die durch einen inneren Kanal miteinander verbunden sind, der sich durch den Körper zur Aufnahme des Seils erstreckt;
wobei der innere Kanal durch eine Wand und ein drehbares Verriegelungselement begrenzt wird,
wobei eine Spannung auf das Seil in einer ersten Richtung eine Kraft auf das drehbare Verriegelungselement ausübt, die das Verriegelungselement in den Kanal drückt, und
die Bewegung des Seils durch den Kanal verhindert, indem die Spannvorrichtung in die standardmäßig verriegelte Konfiguration gebracht wird, und
wobei eine Spannung auf das Seil in einer zweiten entgegengesetzten Richtung eine Kraft auf das drehbare Verriegelungselement ausübt, die das Verriegelungselement aus dem Kanal herausdrückt, um die Spannvorrichtung in die offene Konfiguration zu bringen.

13. Leiter nach Anspruch 12, wobei die Bewegung des Seils in der ersten Richtung die Kraft auf das drehbare Verriegelungselement ausübt und dadurch die Bewegung des Seils durch den Kanal behindert.

14. Leiter nach Anspruch 12, wobei die Bewegung des Seils in der zweiten, entgegengesetzten Richtung die Kraft auf das drehbare Verriegelungselement entlastet, wodurch der Kanal freigegeben wird und die Bewegung des Seils durch den Kanal ermöglicht wird.

15. Leiter nach einem der Ansprüche 12 bis 14, wobei der innere Kanal ochsenbogenförmig ist.

## Revendications

1. Échelle dotée d'un système anti-chute (100), comprenant :
une échelle (1) ;
un tendeur (20) ;
un support (9) monté vers l'extrémité supérieure de l'échelle ;
un câble (10) qui s'étend à partir du tendeur et au-dessus du support dans une configuration en boucle ; et
un dispositif d'arrêt (15) engagé de manière mobile avec le câble pour coupler un utilisateur au câble,
dans lequel le tendeur a une configuration verrouillée pour maintenir la tension sur le câble afin de supporter le poids de l'utilisateur et une configuration ouverte pour permettre au câble de passer à travers le tendeur,
**caractérisé en ce que** le tendeur est monté sur l'échelle à une hauteur accessible à l'utilisateur depuis le sol sur lequel repose l'échelle, et par le fait qu'en cas de chute, un opérateur au sol peut relâcher la corde de manière commandée par l'intermédiaire du tendeur pour ramener l'utilisateur vers le sol par l'intermédiaire du dispositif d'arrêt.

2. Échelle de la revendication 1, dans laquelle le câble comprend une extrémité fixe fixée au tendeur et une extrémité libre qui passe à travers le tendeur pour faire varier la longueur du câble dans le système anti-chute.

3. Échelle de la revendication 1 ou de la revendication 2, dans laquelle le dispositif d'arrêt est couplé à un harnais de sécurité pour y attacher l'utilisateur.

4. Échelle de l'une des revendications 1 à 3, dans laquelle le dispositif d'arrêt fournit une configuration active dans laquelle le dispositif d'arrêt se verrouille sur le câble et maintient ainsi l'utilisateur à un point fixe sur le câble.

5. Échelle de l'une des revendications 1 à 4, dans laquelle le tendeur est configuré pour recevoir et capturer la section médiane du câble entre une entrée et une sortie du tendeur.

6. Échelle de l'une des revendications 1 à 5, dans laquelle l'échelle est une échelle extensible.

7. Échelle de l'une quelconque des revendications 1 à 6, comprenant en outre un système d'attache pour s'attacher à une ancre, comprenant :
un frein monté vers une extrémité supérieure de l'échelle ;
un accouplement monté vers l'extrémité inférieure de l'échelle ; et
une corde allant de l'accouplement au frein en passant par le point d'ancrage,
dans lequel le frein a une configuration opérationnelle pour maintenir la tension sur la corde contre l'ancre et une configuration inopérante permettant à la corde de passer à travers le frein.

8. Échelle de la revendication 7, dans laquelle le frein en configuration opérationnelle tend la corde contre l'ancre, de sorte qu'une première force est appliquée par la corde tirant l'échelle vers l'ancre et une deuxième force est appliquée tirant l'échelle vers le sol sur lequel l'échelle est supportée.

9. Échelle de la revendication 8, dans laquelle la première force agit dans une direction sensiblement horizontale et la deuxième force agit dans une direction sensiblement verticale.

10. Échelle de l'une des revendications 7 à 9, dans laquelle le frein fournit une entrée pour recevoir la corde et une sortie par laquelle une extrémité libre de la corde sort du frein, de sorte qu'une force appliquée à l'extrémité libre de la corde tend la corde contre l'ancre, la tension sur la corde étant maintenue par le frein.

11. Échelle de l'une quelconque des revendications 7 à 10, dans laquelle le frein comprend un actionneur permettant de sélectionner entre la configuration opérationnelle et la configuration inopérante du frein.

12. Échelle de l'une quelconque des revendications 1 à 11, dans laquelle le tendeur comprend :
un corps ayant une entrée et une sortie interconnectées par un canal interne qui s'étend à travers le corps pour recevoir le câble ;
le canal interne est défini par une paroi et un élément de verrouillage rotatif
dans lequel la tension du câble dans une première direction applique une force à l'élément de verrouillage rotatif, poussant l'élément de verrouillage dans le canal et
empêchant le mouvement du câble dans le canal en plaçant le tendeur dans la configuration verrouillée par défaut, et
dans lequel la tension sur le câble dans une deuxième direction opposée applique une force à l'élément de verrouillage rotatif, poussant l'élément de verrouillage hors du canal pour placer le tendeur dans la configuration ouverte.

13. Échelle de la revendication 12, dans laquelle le mouvement du câble dans la première direction applique la force à l'élément de verrouillage rotatif, empêchant ainsi le mouvement du câble à travers le canal.

14. Échelle de la revendication 12, dans laquelle le mouvement du câble dans la deuxième direction opposée relâche la force sur l'élément de verrouillage rotatif, dégageant ainsi le canal et permettant le mouvement du câble à travers le canal.

15. Échelle l'une quelconque des revendications 12 à 14, dans laquelle le canal interne est en forme d'arc de boeuf.
